# EUROPEAN PATENT SPECIFICATION

(11) **EP 1 665 809 B1**
(45) Date of publication and mention of the grant of the patent: **14.11.2007**
(21) Application number: 03753442.7
(22) Date of filing: 22.09.2003
(51) Int. Cl.: H04N 7/52, H04N 7/62, H03M 9/00

(54) **SYSTEM AND METHOD FOR FORMING A BIDIRECTIONAL MULTIMEDIA LINK**
SYSTEM UND VERFAHREN ZUR BILDUNG EINER BIDIREKTIONALEN MULTIMEDIAVERBINDUNG
SYSTEME ET PROCEDE PERMETTANT DE FORMER UN LIEN MULTIMEDIA BIDIRECTIONNEL

(43) Date of publication of application: 07.06.2006
(73) Proprietor: INOVA Semiconductors GmbH, 81671 München (DE)
(72) Inventor: RIEDEL, Michael, Inova Semiconductors Gmbh, 81675 München (DE); NEUMANN, Roland, Inova Semiconductors GmbH, 81675 München (DE)
(74) Representative: Winter, Brandl, Fürniss, Hübner Röss, Kaiser, Polte Partnerschaft Patent- und Rechtsanwaltskanzlei
(86) International application number: PCT/EP2003/010522
(87) International publication number: WO 2005/029869

(56) References cited:
- EP-A- 0 781 054
- WO-A-97/13348
- US-A- 5 410 600
- US-A- 6 151 334
- ANONYM: "FC106 Fibre Channel Transceiver 1.0625 GBaud" ST CATALOGUE, [Online] September 1998 (1998-09), XP002234618 Retrieved from the Internet: <URL:www.st.com/stonline/books/pdf/docs/59 90.pdf> [retrieved on 2003-03-13]

## Description

### TECHNICAL FIELD

The present invention relates to a system and a method for forming a bidirectional multimedia link according to the preambles of claims 1 and 11, respectively and especially relates to an architecture as well as to specific features such as alignment of data and DC balancing of data used by such system and method.

### BACKGROUND ART

Digital satellite systems, DVD players, digital cameras and HDTV, combined with PC graphics, games and the Internet offer a huge amount of digital video and audio data. This multimedia data is processed digitally, and to complete the digital infrastructure the data should be transmitted and displayed digitally without any loss known from analog transmission and display technologies.

One method for transmission of multimedia data such as video data, audio data and so on, is a method which uses the standard IEEE 1394 which is commonly known as Firewire or i-Link. Such method provides for a high transmission speed of presently 400 Mbps and up to 3200 Mbps in future. However, it is necessary to perform a cyclic redundancy check (CRC) or a similar check in order to detect and correct bit errors occurring during transmission or the like.

Furthermore, the maximum length of a twisted pair cable connecting two devices carrying out transmission therebetween is limited to 4.5 m and the maximum length of a multimode optical fiber connecting two devices carrying out transmission therebetweeen is limited to 100 m, both in case of a transmission speed of 400 Mbps.

In addition, the Firewire technology uses a high level protocol to communicate between transmitter side and receiver side.

From EP-A-0 781 054 there are known a system and a method according to the preambles of claims 1 and 11, respectively.

From ANONYM: "FC106 Fibre Channel Transceiver 1.0625 Gbaud" ST CATALOUGE, September 1998, XP002234618 there is known a system for forming a digital multimedia link, comprising transmitter means comprising downstream framer means, receiver means comprising downstream deframer means, serializer means, and deserializer means, wherein at least one type of first downstream multimedia data is input to said downstream framer means to generate first downstream framed parallel data, said first downstream framed parallel data is input to said serializer means to generate first downstream framed serial data, said downstream framed serial data is transmitted to said deserializer means in series to generate second downstream framed parallel data, said second downstream framed parallel data is input to said downstream deframer means to generate second downstream multimedia data corresponding to said at least one type of first downstream multimedia data, said serializer means generates a first system clock for said transmitter means, said deserializer means recovers said first system clock from said first downstream framed serial data transmitted to said deserializer means and generates a second system clock which is synchronous to said first system clock, said downstream framer means multiplexes said at least one type of first downstream multimedia media data into a downstream frame structure and adds an information to said downstream frame structure to generate said first downstream framed parallel data, said information being used for frame alignment which is performed at a side of said receiver means, said downstream deframer means performs said frame alignment of said first downstream serial data by utilizing said information and demultiplexes said second downstream framed parallel data to generate said second downstream multimedia data. Furthermore, there is disclosed a corresponding method.

### DISCLOSURE OF THE INVENTION

It is therefore an object of the present invention to provide a system and method for forming a bidirectional multimedia link which are bit error tolerant, which provide for a long distance transmission of data and which does not use a high-level protocol for transmission of data.

As to the system this object is solved by the subject matter of claim 1 and as to the method this object is solved by the subject matter of claim 11.

Further advantageous modifications of the present invention are subject matter of the dependent claims.

### BRIEF DESCRIPTION OF THE DRAWINGS

These and other aspects of the present invention will be apparent from and elucidated with reference to the embodiments described hereinafter considered in connection with the accompanying drawings, in which:
- **Fig. 1**: is a schematic view showing a logical to physical mapping according to an embodiment of the present invention;
- **Fig. 2**: is a block diagram of a serializer/deserializer architecture according to the embodiment of the present invention;
- **Fig. 3**: is a block diagram of a multimedia link architecture according to the embodiment of the present invention;
- **Fig. 4**: is a schematic view of a downstream frame structure according to the embodiment of the present invention; and
- **Fig. 5**: is a schematic view of an upstream frame structure according to the embodiment of the present invention.

### BEST MODE FOR CARRYING OUT THE INVENTION

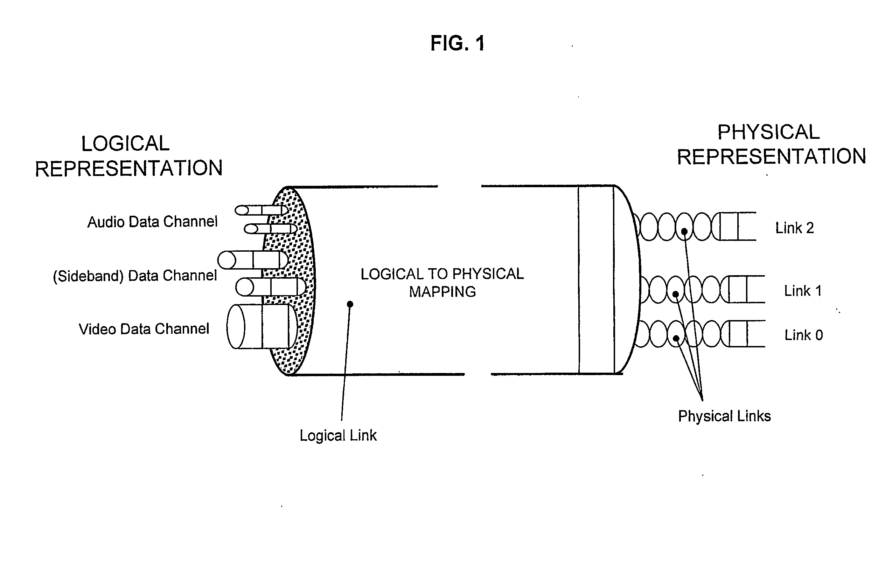

Referring to Fig. 1 there is shown a schematic view of a logical to physical mapping according to an embodiment of the present invention. As shown in Fig. 1 the logical representation of a system according to the embodiment of the present invention provides several logical channels for each different kind of data. In the embodiment of the present invention there are transmitted video data, audio data and sideband data and, thus, there are provided a video data channel, an audio data channel and a sideband data channel. The video data, audio data and sideband data are mapped to several uni-directional physical links as shown in Fig. 1. Although it is shown in Fig. 1 that there are provided three physical links Link 0 to Link 2 it should be noted that any number of links including a single link can be used depending on the respective application and requirements on bandwidth.

It has been found by the inventors of the present invention that the bandwidth and latency requirements of such a system are asymmetrical. High bandwidth is required to transport video data from a video source to a video data consumer, however latency is extremely relaxed. Audio data has low bandwidth and relaxed latency requirements. Both audio and video data form a unidirectional communication path from a video or audio source to a video or audio data consumer which is the downstream direction. In addition, generic sideband data needs to be transmitted to enable control data transfer or to check or change the status of data transfer. This communication path typically is bi-directional in a downstream and upstream direction and has medium bandwidth requirements but might require extreme low latency.

The bandwidth provided by physical links for data transfer needs to be used as efficient as possible. The high bandwidth requirements of video data in the range of 2 Gbit/s does not allow a line coding with many overheads, as data rates above 1 Gbit/s per physical link place too much burdens on the application design.

The key electrical property of the physical link is the capability of AC coupling. The envisaged applications connect different systems over up to 100 meter using an STP cable. To avoid DC currents within the cable, AC coupling is required. This requires the serial data to be DC balanced.

The only communication path between transmitter and receiver means are the serial links themselves. No further signaling might be available. The receiver means has to be able to synchronize to the incoming data stream without additional mechanism after reset, power-up or cable disconnects.

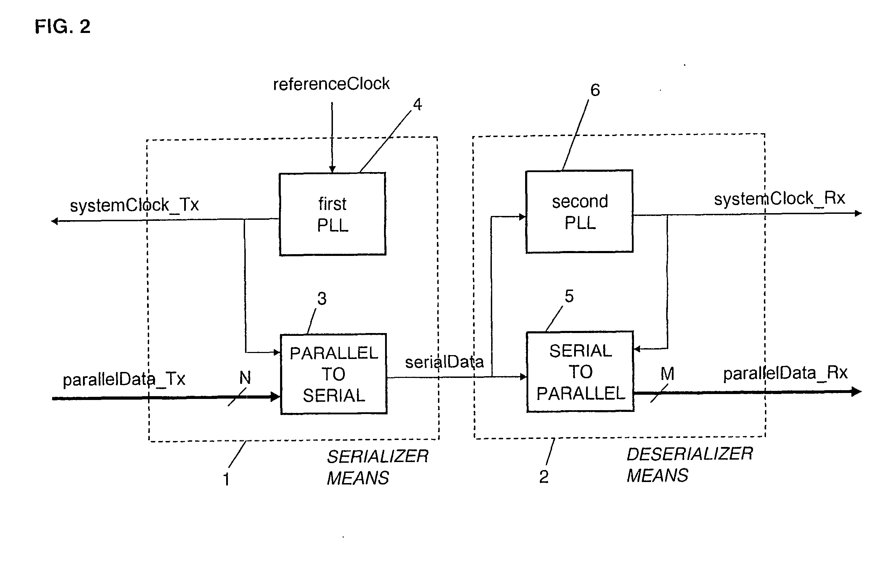

Fig. 2 is a block diagram of a serializer/deserializer architecture according to the embodiment of the present invention. This architecture is present in the downstream direction from a source to a sink.

In Fig. 2 reference sign 1 denotes a serializer means, reference sign 2 denotes a deserializer means, reference sign 3 denotes a parallel to serial converter, reference sign 4 denotes a first PLL (phase locked loop), reference sign 5 denotes a serial to parallel converter and reference sign 6 denotes a second PLL.

A reference clock referenceClock is input to the first PLL 4 of the serializer means 1. An output system clock systemClock_Tx of the first PLL 4 is connected to a clock input of the parallel to serial converter 3. The second PLL 6 of the deserializer means 2 is connected to a serial data input serialData of the deserializer means 2. An output system clock systemClock_Rx of the second PLL 6 is connected to a clock input of the serial to parallel converter.5.

The first PLL 4 multiplies the reference clock referenceClock to obtain a high frequency clock systemClock_Tx. Parallel data paralielData_Tx is serialized with the high frequency clock systemClock_Tx. The serial data serialData triggers the second PLL 6 to recover the high frequency clock to obtain a recovered high frequency clock systemClock_Rx. The serial data serialData is converted to a parallel format with the recovered high frequency clock systemClock _Rx.

The clock system of the serializer means 1 based on the high frequency clock systemClock_Tx and the clock system of the deserializer means 2 based on the recovered high frequency clock systemClock_Rx are synchronous to each other.

While the deserializer means 1 performs a so-called bit alignment the parallel data at the output of the deserializer means 2 is not aligned.

Now, the detailed structure of a multimedia link according to the embodiment of the present invention will be described.

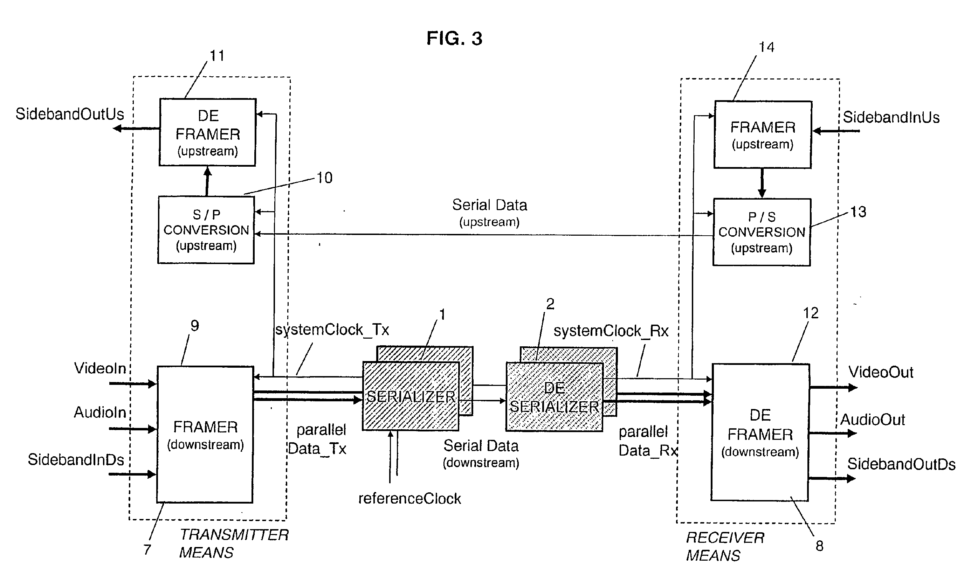

Fig. 3 is a block diagram of the multimedia link architecture according to the embodiment of the present invention.

As shown in Fig. 3, the multimedia link architecture comprises a transmitter means 7 and a receiver means 8. The transmitter means 7 comprises a downstream framer means 9, an upstream serial to parallel conversion means 10 and an upstream deframer means 11. The receiver means 8 comprises a downstream deframer means 12, an upstream parallel to serial conversion means 13 and an upstream framer means 14. Furthermore, the transmitter means 7 and the receiver means 8 are connected via an appropriate number of serializer means 1 and deserializer means 2 as shown in Fig. 2. The number of the serializer means 1 and the deserializer means 2 and therefore the number of downstream physical links is set based on the required bandwidth of the multimedia link architecture. The higher the required bandwidth is the higher the number of downstream physical links is set.

Video data Videoln, audio data Audioln and downstream sideband data SidebandlnDs are input to the downstream framer means 9. An output of the downstream framer means 9 is feed to a parallel data input parallelData_Tx of the serializer means 1. A clock output systemClock_Tx of the serializer means 1 is connected to a clock input of the transmitter means 7. The serializer means 1 and the deserializer means 2 are connected via one or more downstream serial data lines SerialData (downstream). A parallel data output parallelData_Rx of the deserializer means 2, is connected to the downstream deframer means 12. A clock output systemClock_Rx of the deserializer means 2 is connected to a clock input of the receiver means 8. The downstream deframer means 12 outputs video data VideoOut, audio data AudioOut and downstream sideband data SidebandOutDs. Upstream sideband data SidebandlnUs is input to the upstream framer means 14 and its output is connected to the upstream parallel to serial conversion means 13. The upstream parallel to serial conversion means 3 is connected via an upstream serial data line SerialData (upstream) to the upstream serial to parallel conversion means 10. The upstream deframer means 11 outputs upstream sideband data SidebandOutUs and its input is connected to the serial to parallel conversion means 10.

A key property of the multimedia link architecture described above is the provision of the clock system. The multimedia link architecture features a synchronous clock system at the transmitter means 7 and the receiver means 8. The serializer means 1 generates a high frequency system clock systemClock_Tx for the transmitter means 7. Furthermore, the serializer means 1 shifts the serial data out with the high frequency system clock systemClock_Tx. The deserializer means 2 recovers the high frequency system clock systemClock_Tx of the transmitter means 7 out of the serial bit stream and provides a recovered high frequency system clock systemClock_Rx, which is synchronous to the high frequency system clock systemClock_Tx.

This clock system enables in a downstream direction a lossless serial data bit recovery without the need of stuffing bits (no bandwidth overhead for bit recovery).

Furthermore, in an upstream direction no clock recovery is required, as all clocks are synchronous. Also in the upstream direction a lossless serial data bit recovery without the need of stuffing bits is enabled (no bandwidth overhead for bitrecovery).

In the downstream direction multimedia data such as video data, audio data, and sideband data are feed into the downstream framer means 9. The downstream framer means 9 multiplexes this multimedia data into a specific frame structure, adds information to this frame structure for frame alignment, which is performed at the receiver means 8, and performs line coding of the frame structure, which ensures a DC balanced serial data stream. The parallel frame data is serialized at the serializer means 1, transmitted via a serial transmission media such as an STP cable or a fiber optic cable or the like and finally again converted to a parallel data format at the deserializer means 2. Parallel data output at the deserializer means 2 is not aligned, as the deserialization process starts randomly on the serial data stream. The downstream deframer means 12 performs the alignment of the parallel frame data by utilizing specific information of the frame structure and unpacks the multimedia data such as video data, audio data, and sideband data.

In the upstream direction sideband data is feed into the upstream framer means 14. The upstream framer means 14 multiplexes this data into a specific frame structure and converts this data into DC balanced symbols which are converted to a serial data stream at the parallel to serial conversion means 13, transmitted via a serial transmission media such as an STP cable or a fiber optic cable and finally again converted to a parallel data format at the serial to parallel conversion means 10. Due to the synchronous nature of the overall clock system no clock recovery is required in the upstream direction. The serial data can be sampled with the local high frequency clock. Due to runtime effects over the serial data transmission path and due to unavoidable phase shifts between the several clocks a phase alignment is performed within the parallel to serial conversion means 13. The parallel data that is outputted at the serial to parallel conversion means10 is not aligned, as the serial to parallel conversion process starts randomly on the serial data stream. The upstream deframer means 11 performs the alignment of the parallel frame data and decodes the DC balanced symbols to obtain the sideband data SidebandOutUs.

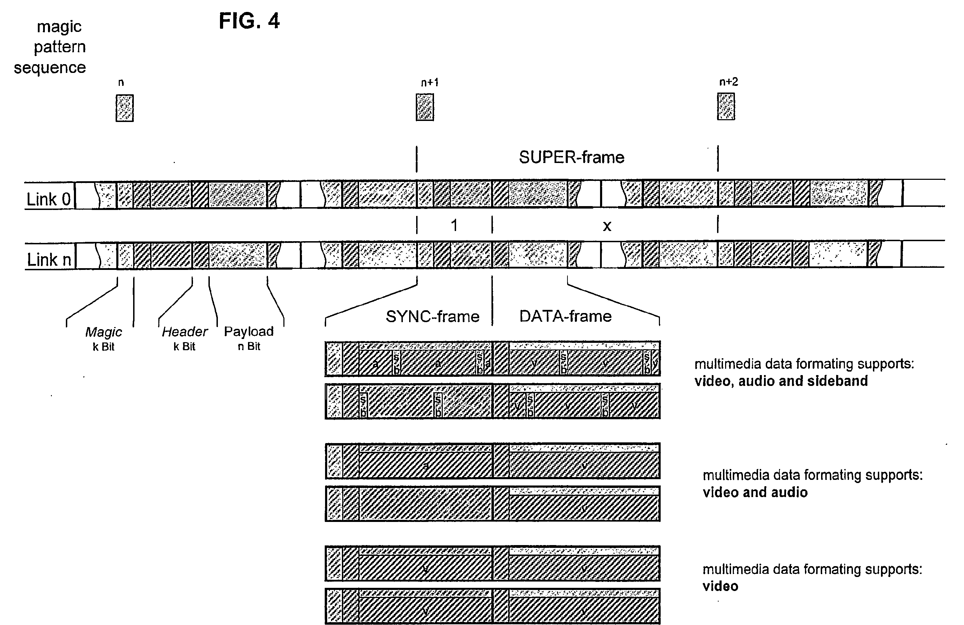

Fig. 4 is a schematic view of a downstream frame structure according to the embodiment of the present invention.

Due to the high bandwidth requirements in the downstream direction the downstream frame structure needs to provide for highest efficiency. Therefore, added data, which is required to enable frame data alignment, to perform line coding and to select between different formats of the multimedia data, needs to be as less as any possible. The frame structure has to provide for high bandwidth and high latency data paths as well as for low or medium bandwidth and extreme low latency data paths.

To support a bandwidth above 1GBit/s scalable link architecture is chosen, to keep the bandwidth per link around 1 Gbit/s.

The downstream frame structure shown in Fig. 4 provides multiple serial links. The basic element is a super-frame SUPER-frame. The super-frame SUPER-frame comprises one synchronization frame SYNC-frame followed by a first predetermined number x of data frames DATA-frames.

The synchronization frame SYNC-frame comprises a second predetermined number k of bits of a first section called magic section and the predetermined number of k bits of a second section called header section followed by a third predetermined number minus the second predetermined number of n-k bits of a payload section.

The data frame DATA-frame comprises the second predetermined number of k bits of a third section called header section followed by the third predetermined number n bits of a payload section.

The first section called magic section of a synchronization frame SYNC-frame comprises a known and unique sequence of bit patterns indicating a start of the synchronization frame SYNC-frame.

The second section called header section of the synchronization frame SYNC-frame comprises control information about line coding and about a format of multimedia data within the payload data. The line coding guarantees for a DC-balanced serial data stream. Therefore, the payload data is conditionally inverted to maintain an equal amount of "1" and "0" bits within the serial data stream over a certain period of time.

The second predetermined number of k bits defines the second section called header section, which results in 2k different binary patterns. A sub-set z of these 2k patterns defines valid frame headers, since not all possible bit permutations of k bits mark valid control information. The remaining or a subset of 2k-z bit patterns form a set of valid magic patterns MP1, ..., Mpi. One of these magic patterns is chosen to have a special meaning and is called bogus magic pattern BMP. This bogus magic pattern BMP can never occur in the chosen line coding. A sequence over the valid magic patterns MP1, ..., Mpi is defined.

Alignment is performed according the following algorithm:
transmitting device: header/magic pattern insertion algorithm

   ```
             sequence_of_magic_patterns = [MP1 , ..., MPi]

                  s := 1

                  FOREVER:

                  - send SYNC-frame

                  MP := sequence_of_magic_patterns[s]
                  PL := payload
                  HD := header
                  send SYNC-frame with magic pattern MP,
                  header HD, payload PL

                  IF s == NUMBER_OF magic patterns THEN:
                        s:=1
                  ELSE:
                        s:=s+1

                  - send sequence of DATA-frames

                  FOR i IN 1 .. NUMBER_OF DATA-frames within one
                  SUPER-frame:
                       PL := payload
                       HD := header
                       send DATA-frame with Header HD and payload PL
```
receiving device: synchronization algorithm

   ```
             sequence of magic patterns = [MP1 , ..., MPi]
             bogus magic pattern BMP
             the length of SYNC-frame and DATA-frame is (n+k) Bits
             window is a sequence of k consecutive bits taken (copied) from the
             bit-serial transmission stream, continuously updated with each
             received serial bit

             FOREVER:

                 receiver is_logically_synchronized := false
                 IF window != BMP THEN:
                       - check whether window contains a valid magic
                       pattern
                       IF window matches one of the magic patterns but not
                       more than one THEN:
                            s := j WHEREAS window ==
                            sequence_of_magic_patterns[j]
                            z:=0
                            FOREVER:
                                 - test header section of each DATA
                                 frame
                                 FOR NUMBER_OF DATA-frames within
                                 one SUPER-frame:
                                      WAIT FOR n+k bits
                                      IF window == BMP THEN:
                                            GOTO nextAttempt
                                      IF window matches
                                      one/more of the magic patterns:
                                            GOTO nextAttempt
                                 - receive next SYNC-frame
                                 WAIT FOR n+k bits
                                 - compute index of the next magic
                                 pattern which has to match
                                 IF s == NUMBER_OF magic patterns
                                 THEN:
                                     s:=1
                                 ELSE:
                                     s:=s+1
                                 - test magic section of the SYNC-frame
                                 IF window does not match
                                 sequence_of_magic_patterns[s] THEN:
                                     GOTO nextAttempt
                                 ELSE:
                                     IFz==
                                     threshold_we_are_supposed_to_
                                     be_synchronized THEN:
                                           receiver_is_logically_
                                           synchronized := true
                                     ELSE:
                                           z:=z+1

                  nextAttempt:
                       shift position of window by one bit (that is: prevent the
                  next received serial bit from copying into the window)
```

DC balancing is performed according the following algorithm:
- frameDisparity :=: amount of '1' within the frame (Synframe or Dataframe) - amount of '0' within the frame (Synframe or Dataframe)
- lineDisparity :=: amount of "1" which were transmitted sofar - amount of '0' which were transmitted so far
invert payload when sign(frameDisparity) = sign(lineDisparity)

To support different bandwidth allocation options for video data, audio data and sideband data, different payload formats exist, which are selected by control bits of the header section. To enable low latency and low jitter data paths for the sideband data the payload bits, which carry sideband data, are equally spaced within the synchronization frame SYNC-frame and the data frame DATA-frame.

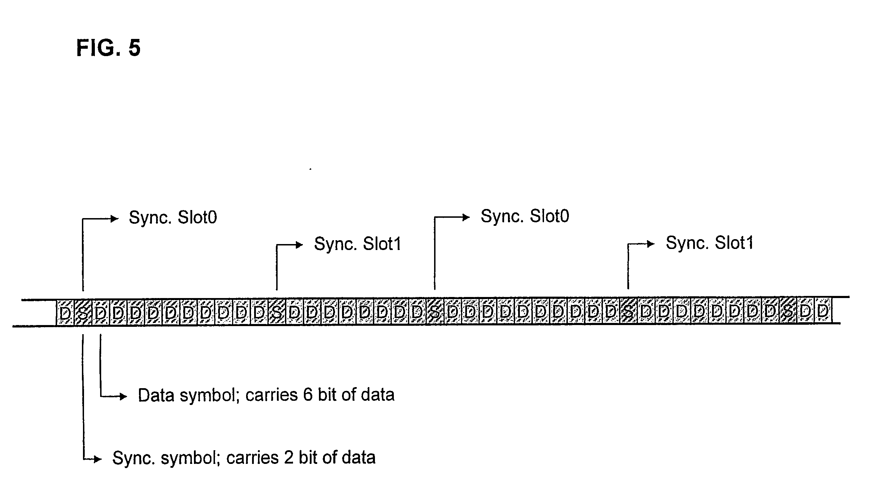

Fig. 5 is a schematic view of an upstream frame structure according to the embodiment of the present invention.

Due to the medium bandwidth requirements in the upstream direction the upstream frame structure has not to provide for highest efficiency but for easy and save frame alignment considering the need of a phase alignment of the serial data stream.

As shown in Fig. 5, the upstream frame structure provides for one serial link. The basic frame structure comprises a sequence of a synchronization symbol S, followed by a fourth predetermined number, i.e. 10, data symbols D, followed by another synchronization symbol S, followed by a fifth predetermined number, i.e. 8, data symbols D and so on. Each symbol comprises 8 bits. The symbols are obtained by a specific 6B/8B-coding schema. The asymmetrical structure of the upstream frame structure allows differentiating between two synchronization symbols. Each synchronization symbol S provides for two low bandwidth data paths. The data symbols D provide for medium bandwidth data paths.

As described above, there is provided an architecture which is highly scalable. On the one hand and as obvious from Fig. 4 high scalability is achieved by different compositions of multimedia data within one serial link and on the other hand high scalability is also achieved by amending the number of serial links used in a respective application.

According to the present invention as described there can be realized transmissions up to 100 m using a STP cable, there is achieved a method tolerant against bit errors due to the frame structure of the data which is not protected by a error protection protocol such as CRC or parity or the like, and there is used a simplified physical layer protocol to perform framing and alignment.

Although the present invention has been described by way of a specific embodiment of the present invention it is not intended to delimit the present invention the specific embodiment described above. Rather, the present invention is intended to include all modifications and amendments which fall within the scope of the present invention as defined in the appended claims.

## Claims

1. System for forming a digital multimedia link, comprising:
transmitter means (7) comprising downstream framer means (9);
receiver means (8) comprising downstream deframer means (12);
serializer means (1); and
deserializer means (2), wherein:
at least one type of first downstream multimedia data is input to said downstream framer means (9) to generate first downstream framed parallel data,
said first downstream framed parallel data is input to said serializer means (1) to generate first downstream framed serial data,
said downstream framed serial data is transmitted to said deserializer means (2) in series to generate second downstream framed parallel data,
said second downstream framed parallel data is input to said downstream deframer means (12) to generate second downstream multimedia data corresponding to said at least one type of first downstream multimedia data,
said serializer means (1) is adapted to generate a first system clock for said transmitter means (7),
said deserializer means (2) is adapted to recover said first system clock from said first downstream framed serial data transmitted to said deserializer means (2) and generates a second system clock which is synchronous to said first system clock,
said downstream framer means (9) is adapted to multiplexe said at least one type of first downstream multimedia media data into a downstream frame structure and adds an information to said downstream frame structure to generate said first downstream framed parallel data, said information being used for frame alignment which is performed at a side of said receiver means (8),
said downstream deframer means (12) is adapted to perform said frame alignment of said first downstream serial data by utilizing said information and demultiplexes said second downstream framed parallel data to generate said second downstream multimedia data, wherein
said downstream framer means (9) is adapted to perform said multiplexing such that said downstream frame structure provides at least one serial link and comprises for each serial link of a sequence of super-frames each comprising a synchronization frame followed by a first predetermined number of data frames, wherein said synchronization frame comprises a second predetermined number of bits of a first section, comprising a known or unique sequence of bit patterns indicating a start of said synchronization frame, and a third predetermined number minus said second predetermined number of bits of payload data, and said data frame comprises said third number of bits of payload data,
***characterized in that***
said downstream framer means is further adapted to perform said multiplexing such that said synchronization frame further comprises said second predetermined number of bits of a second section, being a header section comprising control information about line coding, wherein said line coding guarantees for a DC-balanced serial data stream, and about a format of multimedia data within said payload data, wherein said second predetermined number of bits of said section precedes said third predetermined number minus said second predetermined number of bits of payload data, and said data frame further comprises said second predetermined number of bits of a third section, being a header section comprising control information, preceding said third number of bits of payload data.

2. System according to claim 1, wherein said at least one type of first and second downstream multimedia data comprises at least one of video data, audio data and sideband data.

3. System according to claim 1 or 2, wherein said serializer means (1) and said deserializer means (2) are connected via an STP cable or a fiber optic cable.

4. System according to one of the claims 1 to 3, wherein:
said transmitter means (7) further comprises upstream deframer means (11) and upstream serial to parallel conversion means (10),
said receiver means (8) further comprises upstream framer means (14) and upstream parallel to serial conversion means (13),
first upstream sideband data is input into said upstream framer means (14) to generate first upstream framed parallel data,
said first framed parallel data is input to said upstream parallel to serial conversion means (13) to generate first upstream framed serial data,
said first upstream framed serial data is transmitted to said upstream serial to parallel conversion means (10) in series to generate second upstream framed parallel data, and
said upstream framed parallel data is input to the upstream deframer means (11) to generate second upstream sideband data corresponding to said first upstream sideband data.

5. System according to claim 4, wherein said upstream framer means (14) multiplexes said first upstream sideband data into a upstream frame structure to generate said first upstream framed parallel data.

6. System according to claim 5, wherein said upstream framer means (14) performs line coding of said upstream frame structure to ensure that said first upstream framed serial data is a DC balanced serial data stream.

7. System according to claim 5 or 6, wherein said upstream parallel to serial conversion means (13) and said upstream serial to parallel conversion means (10) are connected via an STP cable or a fiber optic cable.

8. System according to one of the claims 5 to 7, wherein said upstream frame structure provides one serial link and comprises a sequence of a synchronization symbol, followed by a fourth predetermined number of data symbols, followed by another synchronization symbol, followed by a fifth predetermined number of data symbols and so on.

9. System according to claim 8, wherein said fourth predetermined number and said fifth predetermined number are different to each other.

10. System according to claim 8 or 9, wherein said synchronization symbol and said other synchronization symbol are different to each other.

11. Method for forming a digital multimedia link, comprising the steps of:
inputting at least one type of first downstream multimedia data to a downstream framer means (9) of a transmitter means (7) to generate first downstream framed parallel data,
inputting said first downstream framed parallel data to a serializer means (1) to generate first downstream framed serial data,
transmitting said downstream framed serial data to a deserializer means (2) in series to generate second downstream framed parallel data,
inputting said second downstream framed parallel data to a downstream deframer means (12) of a receiver means (8) to generate second downstream multimedia data corresponding to said at least one type of first downstream multimedia data,
generating a first system clock for said transmitter means (7) by said serializer means (1),
recovering said first system clock from said first downstream framed serial data transmitted to said deserializer means (2) and generating a second system clock which is synchronous to said first system clock by said deserializer means (2),
multiplexing said at least one type of first downstream multimedia media data into a downstream frame structure and adding an information to said downstream frame structure by said downstream framer means (9) to generate said first downstream framed parallel data, said information being used for frame alignment which is performed at a side of said receiver means (8), and
performing said frame alignment of said first downstream serial data by utilizing said information and demultiplexing said second downstream framed parallel data by said downstream deframer means (12) to generate said second downstream multimedia data, wherein
said multiplexing is performed such that said downstream frame structure provides at least one serial link and comprises for each serial link of a sequence of super-frames each comprising a synchronization frame followed by a first predetermined number of data frames, wherein said synchronization frame comprises a second predetermined number of bits of a first section, comprising a known or unique sequence of bit patterns indicating a start of said synchronization frame, and a third predetermined number minus said second predetermined number of bits of payload data, and said data frame comprises said third number of bits of payload data,
***characterized in that***
said multiplexing is further performed such that said synchronization frame further comprises said second predetermined number of bits of a second section, being a header section comprising control information about line coding, wherein said line coding guarantees for a DC-balanced serial data stream, and about a format of multimedia data within said payload data, wherein said second predetermined number of bits of said section precedes said third predetermined number minus said second predetermined number of bits of payload data, and said data frame further comprises said second predetermined number of bits of a third section, being a header section comprising control information, preceding said third number of bits of payload data.

12. Method according to claim 11, wherein said at least one type of first and second downstream multimedia data comprises at least one of video data, audio data and sideband data.

13. Method according to claim 11 or 12, comprising the steps of:
inputting first upstream sideband data to a upstream framer means (14) of said receiver means (8) to generate first upstream framed parallel data,
inputting said first framed parallel data to a upstream parallel to serial conversion means (13) of said receiver means (8) to generate first upstream framed serial data,
transmitting said first upstream framed serial data to a upstream serial to parallel conversion means (10) of said transmitter means (7) in series to generate second upstream framed parallel data, and
inputting said upstream framed parallel data to a upstream deframer means (11) of said transmitter means (7) to generate second upstream sideband data corresponding to said first upstream sideband data.

14. Method according to claim 13, comprising the step of multiplexing said first upstream sideband data into a upstream frame structure by said upstream framer means (14) to generate said first upstream framed parallel data.

15. Method according to 14, comprising the step of performing line coding of said upstream frame structure performed by said upstream framer means (14) to ensure that said first upstream framed serial data is a DC balanced serial data stream.

16. Method according to claim 14 or 15, wherein said upstream frame structure provides one serial link and comprises of a sequence of a synchronization symbol, followed by a fourth predetermined number of data symbols, followed by another synchronization symbol, followed by a fifth predetermined number of data symbols and so on.

17. Method according to claim 16, wherein said fourth predetermined number and said fifth predetermined number are different to each other.

18. Method according to claim 16 or 17, wherein said synchronization symbol and said other synchronization symbol are different to each other.

## Patentansprüche

1. System zum Ausbilden einer digitalen Multimediaverbindung, das aufweist:
eine Sendeeinrichtung (7), die eine Abwärts-Einrahmeinrichtung (9) aufweist;
eine Empfangseinrichtung (8), die eine Abwärts-Ausrahmeinrichtung (12) aufweist;
eine Serialisiereinrichtung (1); und
eine Deserialisiereinrichtung (2), wobei:
mindestens ein Typ von ersten abwärtigen Multimediadaten in die Abwärts-Einrahmeinrichtung (9) eingegeben wird, um erste abwärtige gerahmte parallele Daten zu erzeugen,
die ersten abwärtigen gerahmten parallelen Daten in die Serialisiereinrichtung (1) eingegeben werden, um erste abwärtige gerahmte serielle Daten zu erzeugen,
die abwärtigen gerahmten seriellen Daten seriell zu der Deserialisiereinrichtung (2) gesendet werden, um zweite abwärtige gerahmte parallele Daten zu erzeugen,
die zweiten abwärtigen gerahmten parallelen Daten in die Abwärts-Ausrahmeinrichtung (12) eingegeben werden, um zweite abwärtige Multimediadaten zu erzeugen, die dem mindestens einem Typ von ersten abwärtigen Multimediadaten entsprechen,
die Serialisiereinrichtung (1) dazu ausgelegt ist, einen ersten Systemtakt für die Sendeeinrichtung (7) zu erzeugen,
die Deserialisiereinrichtung (2) dazu ausgelegt ist, den ersten Systemtakt aus den ersten abwärtigen gerahmten seriellen Daten wieder zu gewinnen, die zu der Deserialisiereinrichtung (2) gesendet werden, und einen zweiten Systemtakt zu erzeugen, welcher zu dem ersten Systemtakt synchronisiert ist,
die Abwärts-Einrahmeinrichtung (9) dazu ausgelegt ist, den mindestens einen Typ von ersten abwärtigen Multimediadaten zu einer abwärtigen Rahmenstruktur zu multiplexen und eine Information zu der abwärtigen Rahmenstruktur hinzuzufügen, um die ersten abwärtigen gerahmten parallelen Daten zu erzeugen, wobei die Information für eine Rahmenausrichtung verwendet wird, welche an einer Seite der Empfangseinrichtung (8) durchgeführt wird,
die Abwärts-Ausrahmeinrichtung (12) dazu ausgelegt ist, die Rahmenausrichtung der ersten abwärtigen seriellen Daten unter Verwendung der Information durchzuführen und die zweiten abwärtigen gerahmten parallelen Daten zu demultiplexen, um die zweiten abwärtigen Multmediadaten zu erzeugen, und
die Abwärts-Einrahmeinrichtung (9) dazu ausgelegt ist, das Multiplexen derart durchzuführen, dass die abwärtige Rahmenstruktur mindestens eines serielle Verbindung vorsieht und für jede serielle Verbindung eine Folge von Überrahmen aufweist, von denen jeder einen Synchronisationsrahmen, gefolgt von einer ersten vorbestimmten Anzahl von Datenrahmen aufweist, wobei der Synchronisationsrahmen eine zweite vorbestimmte Anzahl von Bits eines ersten Bereichs, der eine bekannte oder eindeutige Folge von Bitmustern aufweist, die einen Start des Synchronisationsrahmens anzeigen, und eine dritte vorbestimmte Anzahl minus der zweiten vorbestimmten Anzahl von Bits von Nutzdaten aufweist und der Datenrahmen die dritte Anzahl von Bits von Nutzdaten aufweist,
***dadurch gekennzeichnet, dass***
die Abwärts-Einrahmeinrichtung weiterhin dazu ausgelegt ist, das Multiplexen derart durchzuführen, dass der Synchronisationsrahmen weiterhin die zweite vorbestimmte Anzahl von Bits eines zweiten Bereichs aufweist, der ein Header-Bereich ist, der eine Steuerinformation bezüglich eines Leitungskodierung, wobei die Leitungskodierung einen gleichgrößenabgeglichenen seriellen Datenstrom sicherstellt, und bezüglich eines Formats von Multimediadaten in den Nutzdaten aufweist, wobei die zweite vorbestimmte Anzahl von Bits des Bereichs der dritten vorbestimmten Anzahl minus der zweiten vorbestimmten Anzahl von Bits von Nutzdaten vorangeht und der Datenrahmen weiterhin die zweite vorbestimmte Anzahl von Bits eines dritten Bereichs aufweist, der ein Header-Bereich ist, der eine Steuerinformation aufweist, der der dritten Anzahl von Bits von Nutzdaten vorangeht.

2. System nach Anspruch 1, wobei der mindestens eine Typ von ersten und zweiten abwärtigen Multimediadaten mindestens entweder Videodaten, Audiodaten und Seitenbanddaten aufweist.

3. System nach Anspruch 1 oder 2, wobei die Serialisiereinrichtung (1) und die Deserialisiereinrichtung (2) über ein STP-Kabel oder ein Lichtwellenleiterkabel verbunden sind.

4. System nach einem der Ansprüche 1 bis 3, wobei:
die Sendeeinrichtung (7) weiterhin eine Aufwärts-Ausrahmeinrichtung (11) und eine Aufwärts-SerieII/Parallel-Wandlereinrichtung (10) aufweist,
die Empfangseinrichtung (8) weiterhin eine Aufwärts-Einrahmeinrichtung (14) und eine Aufwärts-Parallel/Seriell-Wandlereinrichtung (13) aufweist,
erste aufwärtige Seitenbanddaten in die Aufwärts-Einrahmeinrichtung (14) eingegeben werden, um erste aufwärtige gerahmte parallele Daten zu erzeugen,
die ersten aufwärtige gerahmten parallelen Daten in die Aufwärts-Parallel/Seriell-Wandlereinrichtung (13) eingegeben werden, um erste aufwärtige gerahmte serielle Daten zu erzeugen,
die ersten aufwärtigen gerahmten seriellen Daten seriell zu der Aufwärts-Seriell/Parallel-Wandlereinrichtung (10) gesendet werden, um zweite aufwärtige gerahmte parallele Daten zu erzeugen, und
die aufwärtigen gerahmten parallelen Daten in die Aufwärts-Ausrahmeinrichtung (11) eingegeben werden, um zweite aufwärtige Seitenbanddaten zu erzeugen, die den ersten aufwärtigen Seitenbandaten entsprechen.

5. System nach Anspruch 4, wobei die Aufwärts-Einrahmeinrichtung (14) die ersten aufwärtigen Seitenbanddaten zu einer aufwärtigen Rahmenstruktur multiplext, um die ersten aufwärtigen gerahmten parallelen Daten zu erzeugen.

6. System nach Anspruch 5, wobei die Aufwärts-Einrahmeinrichtung (14) eine Leitungskodierung der aufwärtigen Rahmenstruktur durchführt, um sicherzustellen, dass die ersten aufwärtigen gerahmten seriellen Daten ein gleichgrößenabgeglichener serieller Datenstrom sind.

7. System nach Anspruch 5 oder 6, wobei die Aufwärts- Parallel/Seriell-Wandlereinrichtung (13) und die Aufwärts-Seriell/Parallel-Wandlereinrichtung (10) über ein STP-Kabel oder ein Lichtwellenleiterkabel verbunden sind.

8. System nach einem der Ansprüche 5 bis 7, wobei die aufwärtige Rahmenstruktur eine serielle Verbindung vorsieht und eine Folge eines Synchronisationssymbols, gefolgt von einer vierten vorbestimmten Anzahl von Datensymbolen, gefolgt von einem weiteren Synchronisationssymbol, gefolgt von einer fünften vorbestimmten Anzahl von Datensymbolen usw. aufweist.

9. System nach Anspruch 8, wobei die vierte vorbestimmte Anzahl und die fünfte vorbestimmte Anzahl zueinander unterschiedlich sind.

10. System nach Anspruch 8 oder 9, wobei das Synchronisationssymbol und das weitere Synchronisationssymbol zueinander unterschiedlich sind.

11. Verfahren zum Ausbilden einer digitalen Multimediaverbindung, das die Schritte aufweist:
Eingeben mindestens eines Typs von ersten abwärtigen Multimediadaten in eine Abwärts-Einrahmeinrichtung (9) einer Sendeeinrichtung (7), um erste abwärtige gerahmte parallele Daten zu erzeugen,
Eingeben der ersten abwärtigen gerahmten parallelen Daten in eine Serialisiereinrichtung (1), um erste abwärtige gerahmte serielle Daten zu erzeugen,
serielles Senden der abwärtigen gerahmten seriellen Daten zu einer Deserialisiereinrichtung (2), um zweite abwärtige gerahmte parallele Daten zu erzeugen,
Eingeben der zweiten abwärtigen gerahmten parallelen Daten in eine Abwärts-Ausrahmeinrichtung (12) einer Empfangseinrichtung (8), um zweite abwärtige Multimediadaten zu erzeugen, die dem mindestens einem Typ von ersten abwärtigen Multimediadaten entsprechen,
Erzeugen eines ersten Systemtakts für die Sendeeinrichtung (7) durch die Serialisiereinrichtung (1),
Wiedergewinnen des ersten Systemtakts aus den ersten abwärtigen gerahmten seriellen Daten, die zu der Deserialisiereinrichtung (2) gesendet werden, und Erzeugen eines zweiten Systemtakts, welcher zu dem ersten Systemtakt synchronisiert ist, durch die Deserialisiereinrichtung (2),
Multiplexen des mindestens einen Typs von ersten abwärtigen Multimediadaten zu einer abwärtigen Rahmenstruktur und Hinzufügen einer Information zu der abwärtigen Rahmenstruktur durch die Abwärts-Einrahmeinrichtung (9), um die ersten abwärtigen gerahmten parallelen Daten zu erzeugen, wobei die Information für eine Rahmenausrichtung verwendet wird, welche an einer Seite der Empfangseinrichtung (8) durchgeführt wird, und
Durchführen der Rahmenausrichtung der ersten abwärtigen seriellen Daten unter Verwendung der Information und Demultiplexen der zweiten abwärtigen gerahmten parallelen Daten durch die Abwärts-Ausrahmeinrichtung (12), um die zweiten abwärtigen Multmediadaten zu erzeugen, wobei
das Multiplexen derart durchgeführt wird, dass die abwärtige Rahmenstruktur mindestens eines serielle Verbindung vorsieht und für jede serielle Verbindung eine Folge von Überrahmen aufweist, von denen jeder einen Synchronisationsrahmen, gefolgt von einer ersten vorbestimmten Anzahl von Datenrahmen aufweist, wobei der Synchronisationsrahmen eine zweite vorbestimmte Anzahl von Bits eines ersten Bereichs, der eine bekannte oder eindeutige Folge von Bitmustern aufweist, die einen Start des Synchronisationsrahmens anzeigen, und eine dritte vorbestimmte Anzahl minus der zweiten vorbestimmten Anzahl von Bits von Nutzdaten aufweist und der Datenrahmen die dritte Anzahl von Bits von Nutzdaten aufweist,
***dadurch gekennzeichnet, dass***
das Multiplexen weiterhin derart durchgeführt wird, dass der Synchronisationsrahmen weiterhin die zweite vorbestimmte Anzahl von Bits eines zweiten Bereichs aufweist, der ein Header-Bereich ist, der eine Steuerinformation bezüglich eines Leitungskodierung, wobei die Leitungskodierung einen gleichgrößenabgeglichenen seriellen Datenstrom sicherstellt, und bezüglich eines Formats von Multimediadaten in den Nutzdaten aufweist, wobei die zweite vorbestimmte Anzahl von Bits des Bereichs der dritten vorbestimmten Anzahl minus der zweiten vorbestimmten Anzahl von Bits von Nutzdaten vorangeht und der Datenrahmen weiterhin die zweite vorbestimmte Anzahl von Bits eines dritten Bereichs aufweist, der ein Header-Bereich ist, der eine Steuerinformation aufweist, der der dritten Anzahl von Bits von Nutzdaten vorangeht.

12. Verfahren nach Anspruch 11, wobei der mindestens eine Typ von ersten und zweiten abwärtigen Multimediadaten mindestens entweder Videodaten, Audiodaten und Seitenbanddaten aufweist.

13. Verfahren nach Anspruch 11 oder 12, das die Schritte aufweist:
Eingeben von ersten aufwärtigen Seitenbanddaten in eine Aufwärts-Einrahmeinrichtung (14) der Empfangseinrichtung (8), um erste aufwärtige gerahmte parallele Daten zu erzeugen,
Eingeben der ersten gerahmten parallelen Daten in eine Aufwärts-Parallel/Seriell-Wandlereinrichtung (13) der Empfangseinrichtung (8), um erste aufwärtige gerahmte serielle Daten zu erzeugen,
serielles Senden der ersten aufwärtigen gerahmten seriellen Daten zu einer Aufwärts-Seriell/Parallel-Wandlereinrichtung (10) der Sendeeinrichtung (7), um zweite aufwärtige gerahmte parallele Daten zu erzeugen, und
Eingeben der aufwärtigen gerahmten parallelen Daten in eine Aufwärts-Ausrahmeinrichtung (11) der Sendeeinrichtung (7), um zweite aufwärtige Seitenbanddaten zu erzeugen, die den ersten aufwärtigen Seitenbandaten entsprechen.

14. Verfahren nach Anspruch 13, das den Schritt eines Multiplexens der ersten aufwärtigen Seitenbanddaten zu einer aufwärtigen Rahmenstruktur durch die Aufwärts-Einrahmeinrichtung (14) aufweist, um die ersten aufwärtigen gerahmten parallelen Daten zu erzeugen.

15. Verfahren nach Anspruch 14, das den Schritt eines Durchführens einer Leitungskodierung der aufwärtigen Rahmenstruktur aufweist, die von der Aufwärts-Einrahmeinrichtung (14) durchgeführt wird, um sicherzustellen, dass die ersten aufwärtigen gerahmten seriellen Daten ein gleichgrößenabgeglichener serieller Datenstrom sind.

16. Verfahren nach Anspruch 14 oder 15, wobei die aufwärtige Rahmenstruktur eine serielle Verbindung vorsieht und eine Folge eines Synchronisationssymbols, gefolgt von einer vierten vorbestimmten Anzahl von Datensymbolen, gefolgt von einem weiteren Synchronisationssymbol, gefolgt von einer fünften vorbestimmten Anzahl von Datensymbolen usw. aufweist.

17. Verfahren nach Anspruch 16, wobei die vierte vorbestimmte Anzahl und die fünfte vorbestimmte Anzahl zueinander unterschiedlich sind.

18. Verfahren nach Anspruch 16 oder 17, wobei das Synchronisationssymbol und das weitere Synchronisationssymbol zueinander unterschiedlich sind.

## Revendications

1. Système permettant de former un lien multimédia numérique, comprenant :
des moyens d'émission (7) comprenant des moyens de trameur descendants (9);
des moyens de réception (8) comprenant des moyens de détrameur descendants (12) ;
des moyens de convertisseur parallèle-série (1) ; et
des moyens de convertisseur série-parallèle (2), dans lequel :
au moins un type de premières données multimédia descendantes entre dans lesdits moyens de trameur descendants (9) pour générer des premières données parallèles à trame descendantes,
lesdites premières données parallèles à trame descendantes entrent dans lesdits moyens de convertisseur parallèle-série (1) pour générer des premières données sérielles à trame descendantes,
lesdites données sérielles à trame descendantes sont transmises auxdits moyens de convertisseur série-parallèle (2) en série pour générer des secondes données parallèles à trame descendantes,
lesdites secondes données parallèles à trame descendantes entrent dans lesdits moyens de détrameur descendants (12) pour générer des secondes données multimédia descendantes correspondant audit au moins un type de premières données multimédia descendantes,
lesdits moyens de convertisseur parallèle-série (1) sont adaptés pour générer une première horloge système pour lesdits moyens d'émission (7),
lesdits moyens de convertisseur série-parallèle (2) sont adaptés pour récupérer ladite première horloge système à partir desdites premières données sérielles à trame descendantes transmises vers lesdits moyens de convertisseur série-parallèle (2) et pour générer une seconde horloge système qui est synchrone à ladite première horloge système,
lesdits moyens de trameur descendants (9) sont adaptés pour multiplexer ledit au moins un type de premières données à support multimédia descendantes dans une structure à trame descendante et ajoutent une information à ladite structure à trame descendante pour générer lesdites premières données parallèles à trame descendantes, ladite information étant utilisée pour l'alignement de la trame qui est effectué sur un côté desdits moyens de réception (8),
lesdits moyens de détrameur descendants (12) sont adaptés pour effectuer ledit alignement de trame desdites premières données sérielles descendantes en utilisant ladite information et démultiplexent lesdites secondes données parallèles à trame descendantes pour générer lesdites secondes données multimédia descendantes, dans lequel
lesdits moyens de trameur descendants (9) sont adaptés pour effectuer ledit multiplexage de telle manière que ladite structure à trame descendante fournisse au moins une liaison en série et comprenne pour chaque liaison en série d'une séquence de super-trames, chacune comprenant une trame de synchronisation suivie par un premier nombre prédéterminé de trames de données, dans lequel ladite trame de synchronisation comprend un deuxième nombre prédéterminé de bits d'une première section, comprenant une séquence connue ou unique de profils binaires indiquant un démarrage de ladite trame de synchronisation, et un troisième nombre prédéterminé moins ledit deuxième nombre prédéterminé de bits de données de charge utile, et ladite trame de données comprend ledit deuxième nombre de bits de données de charge utile,
**caractérisé en ce que**
lesdits moyens de trameur descendants sont en outre adaptés pour effectuer ledit multiplexage de telle manière que ladite trame de synchronisation comprenne en outre ledit deuxième nombre prédéterminé de bits d'une deuxième section, qui est une section à en-tête comprenant les informations de commande sur le codage par ligne, dans lequel ledit codage par ligne garantit un flux de données sérielles équilibré en courant continu, et sur un format de données multimédia dans lesdites données de charge utile, dans lequel ledit deuxième nombre prédéterminé de bits de ladite section précède ledit troisième nombre prédéterminé moins ledit deuxième nombre prédéterminé de bits de données de charge utile, et ladite trame de données comprend en outre ledit deuxième nombre prédéterminé de bits d'une troisième section, qui est une section à en-tête comprenant les informations de commande, précédant ledit troisième nombre de bits de données de charge utile.

2. Procédé selon la revendication 1, dans lequel ledit au moins un type de premières et de secondes données multimédia descendantes comprend au moins un élément parmi des données vidéo, des données audio et des données de bande latérale.

3. Procédé selon la revendication 1 ou 2, dans lequel lesdits moyens de convertisseur parallèle-série (1) et lesdits moyens de convertisseur série-parallèle (2) sont connectés par un câble STP ou un câble à fibre optique.

4. Procédé selon l'une quelconque des revendications 1 à 3, dans lequel :
lesdits moyens d'émission (7) comprennent en outre des moyens de détrameur ascendant (11) et des moyens de conversion série-parallèle ascendants (10),
lesdits moyens de réception (8) comprennent en outre des moyens de trameur ascendant (14) et des moyens de conversion parallèle-série ascendants (13),
les premières données de bande latérale ascendantes entrent dans lesdits moyens de trameur ascendant (14) pour générer des premières données parallèles à trame ascendantes,
lesdites premières données parallèles à trame entrent dans lesdits moyens de conversion parallèle-série ascendants (13) pour générer des premières données sérielles à trame ascendantes,
lesdites premières données sérielles à trame ascendantes sont transmises auxdits moyens de conversion série-parallèle ascendants (10) en série pour générer des secondes données parallèles à trame ascendantes, et
lesdites données parallèles à trame ascendantes entrent dans les moyens de détrameur ascendant (11) pour générer des secondes données de bande latérale ascendantes correspondant auxdites premières données de bande latérale ascendantes.

5. Procédé selon la revendication 4, dans lequel lesdits moyens de trameur ascendant (14) multiplexent lesdites premières données de bande latérale ascendantes dans une structure à trame ascendante pour générer lesdites premières données parallèles à trame ascendantes.

6. Procédé selon la revendication 5, dans lequel lesdits moyens de trameur ascendant (14) effectuent un codage par ligne de ladite structure à trame ascendante pour garantir que lesdites premières données sérielles à trame ascendantes sont un flux de données sérielles équilibré en courant continu.

7. Procédé selon la revendication 5 ou 6, dans lequel lesdits moyens de conversion parallèle-série ascendants (13) et lesdits moyens de conversion série-parallèle ascendants (10) sont connectés par un câble STP ou un câble à fibre optique.

8. Procédé selon l'une quelconque des revendications 5 à 7, dans lequel ladite structure à trame ascendante fournit une liaison en série et comprend une séquence d'un symbole de synchronisation, suivie par un quatrième nombre prédéterminé de symboles de données, suivi par un autre symbole de synchronisation, suivi par un cinquième nombre prédéterminé de symboles de données et ainsi de suite.

9. Procédé selon la revendication 8, dans lequel ledit quatrième nombre prédéterminé et ledit cinquième nombre prédéterminé sont différents l'un de l'autre.

10. Procédé selon la revendication 8 ou 9, dans lequel ledit symbole de synchronisation et ledit autre symbole de synchronisation sont différents l'un de l'autre.

11. Procédé permettant de former un lien multimédia numérique, comprenant les étapes :
d'entrée d'au moins un type de premières données multimédia descendantes dans des moyens de trameur descendants (9) de moyens d'émission (7) pour générer des premières données parallèles à trame descendantes,
d'entrée desdites premières données parallèles à trame descendantes dans des moyens de convertisseur parallèle-série (1) pour générer des premières données sérielles à trame descendantes,
de transmission desdites données sérielles à trame descendantes dans des moyens de convertisseur série-parallèle (2) en série pour générer des secondes données parallèles à trame descendantes,
d'entrée desdites secondes données parallèles à trame descendantes dans des moyens de détrameur descendants (12) de moyens de réception (8) pour générer des secondes données multimédia descendantes correspondant audit au moins un type de premières données multimédia descendantes,
de génération d'une première horloge système pour lesdits moyens d'émission (7) par lesdits moyens de convertisseur parallèle-série (1),
de récupération de ladite première horloge système à partir desdites premières données sérielles à trame descendantes transmises vers lesdits moyens de convertisseur série-parallèle (2) et de génération d'une seconde horloge système qui est synchrone à la première horloge système par lesdits moyens de convertisseur série-parallèle (2),
de multiplexage dudit au moins un type de premières données à support multimédia descendantes dans une structure à trame descendante et d'ajout d'une information à ladite structure à trame descendante par lesdits moyens de trameur descendants (9) pour générer lesdites premières données parallèles à trame descendantes, ladite information étant utilisée pour l'alignement de la trame qui est effectué sur un côté desdits moyens de réception (8), et
d'exécution dudit alignement de trame desdites premières données sérielles descendantes en utilisant ladite information et de démultiplexage desdites secondes données parallèles à trame descendantes par lesdits moyens de détrameur descendants (12) pour générer lesdites secondes données multimédia descendantes, dans lequel
ledit multiplexage est effectué de telle manière que ladite structure à trame descendante fournisse au moins une liaison en série et comprenne pour chaque liaison en série d'une séquence de super-trames, chacune comprenant une trame de synchronisation suivie par un premier nombre prédéterminé de trames de données, dans lequel ladite trame de synchronisation comprend un deuxième nombre prédéterminé de bits d'une première section, comprenant une séquence connue ou unique de profils binaires indiquant un démarrage de ladite trame de synchronisation, et un troisième nombre prédéterminé moins ledit deuxième nombre prédéterminé de bits de données de charge utile, et ladite trame de données comprend ledit troisième nombre de bits de données de charge utile,
**caractérisé en ce que**
ledit multiplexage est en outre effectué de telle manière que ladite trame de synchronisation comprenne en outre ledit nombre prédéterminé de bits d'une seconde section, qui est une section à en-tête comprenant les informations de commande sur le codage par ligne, dans lequel ledit codage par ligne garantit un flux de données sérielles équilibré en courant continu, et sur un format de données multimédia dans lesdites données de charge utile, dans lequel ledit deuxième nombre prédéterminé de bits de ladite section précède ledit troisième nombre prédéterminé moins ledit deuxième nombre prédéterminé de bits de données de charge utile, et ladite trame de données comprend en outre ledit deuxième nombre prédéterminé de bits d'une troisième section, qui est une section à en-tête comprenant les informations de commande, précédant ledit troisième nombre de bits de données de charge utile.

12. Procédé selon la revendication 11, dans lequel ledit au moins un type de premières et de secondes données multimédia descendantes comprend au moins un élément parmi des données vidéo, des données audio et des données de bande latérale.

13. Procédé selon la revendication 11 ou 12, comprenant les étapes:
d'entrée des premières données de bande latérale ascendantes dans des moyens de trameur ascendant (14) desdits moyens de réception (8) pour générer des premières données parallèles à trame ascendantes,
d'entrée desdites premières données parallèles à trame dans des moyens de conversion parallèle-série ascendants (13) desdits moyens de réception (8) pour générer des premières données sérielles à trame ascendantes,
de transmission desdites premières données sérielles à trame ascendantes vers des moyens de conversion série-parallèle ascendants (10) desdits moyens d'émission (7) en série pour générer des secondes données parallèles à trame ascendantes, et
d'entrée desdites données parallèles à trame ascendantes dans des moyens de détrameur ascendant (11) desdits moyens d'émission (7) pour générer des secondes données de bande latérale ascendantes correspondant auxdites premières données de bande latérale ascendantes.

14. Procédé selon la revendication 13, comprenant l'étape de multiplexage desdites premières données de bande latérale ascendantes dans une structure à trame ascendante par lesdits moyens de trameur ascendant (14) pour générer lesdites premières données parallèles à trame ascendantes.

15. Procédé selon la revendication 14, comprenant l'étape de codage par ligne de ladite structure à trame ascendante effectuée par lesdits moyens de trameur ascendant (14) pour garantir que lesdites premières données sérielles à trame ascendantes sont un flux de données sérielles équilibré en courant continu.

16. Procédé selon la revendication 14 ou 15, dans lequel ladite structure à trame ascendante fournit une liaison en série et comprend une séquence d'un symbole de synchronisation, suivie par un quatrième nombre prédéterminé de symboles de données, suivi par un autre symbole de synchronisation, suivi par un cinquième nombre prédéterminé de symboles de données et ainsi de suite.

17. Procédé selon la revendication 16, dans lequel ledit quatrième nombre prédéterminé et ledit cinquième nombre prédéterminé sont différents l'un de l'autre.

18. Procédé selon la revendication 16 ou 17, dans lequel ledit symbole de synchronisation et ledit autre symbole de synchronisation sont différents l'un de l'autre.
